# EUROPEAN PATENT SPECIFICATION

(11) **EP 3 289 600 B1**
(45) Date of publication and mention of the grant of the patent: **01.04.2026**
(21) Application number: 16802283.8
(22) Date of filing: 27.05.2016
(51) Int. Cl.: H01G 11/24, H01G 11/26, H01G 11/28, H01G 11/30, H01G 11/46, H01G 11/86

(54) **POROUS ELECTRODES AND METHOD AND FABRICATION THEREOF**
PORÖSE ELEKTRODEN SOWIE VERFAHREN UND HERSTELLUNG DAFÜR
ÉLECTRODES POREUSES ET PROCÉDÉ ET LEUR FABRICATION

(30) Priority: 03.06.2015 US 201562170210 P
(43) Date of publication of application: 07.03.2018
(73) Proprietor: Institut National De La Recherche Scientifique, Québec, Québec G1K 9A9 (CA); Centre National De La Recherche Scientifique, 75794 Paris Cédex (FR)
(72) Inventor: FERRIS, Anaïs, 31850 Beaupuy (FR); GARBARINO, Sébastien, Montréal, Québec H1X 2Z9 (CA); PECH, Sarinn David, 31000 Toulouse (FR); GUAY, Daniel, Saint-Lambert, Québec J4P 3A5 (CA); VIENS, Jonathan, Ayer's Cliff, Québec J0B 1C0 (CA)
(74) Representative: Santarelli
(86) International application number: PCT/CA2016/050604
(87) International publication number: WO 2016/191863

(56) References cited:
- WO-A1-2008/106991
- WO-A2-2004/054015
- US-A1- 2009 052 117
- US-A1- 2011 108 063
- US-A1- 2013 295 461

## Description

### FIELD OF THE INVENTION

The present invention relates to porous films. More specifically, the present invention is concerned with porous films and method and fabrication thereof.

### BACKGROUND OF THE INVENTION

The increasing importance of portable and wearable devices incorporating more advanced electronic technologies, as well as the future deployment of wireless sensor networks embedded in our everyday environment has made on-board energy storage a critical issue [1]. A harvested energy may be stored in micro-batteries (Li or Li-ions), but their finite lifetime may be problematic when they have to be embedded in systems with limited accessibility, such as structure-embedded microsensors, where no maintenance or replacement is possible. Micro-batteries are moreover inefficient to supply loading applications requiring high amount of power.

In the last decade, the integration of miniaturized electrochemical capacitors, also referred to as supercapacitors, on circuit chips has been the subject of intense research due to their excellent charge-discharge rate and long operating lifetime [2-7]. Although ultrahigh-power microsized supercapacitors have been reported [8-14], they still suffer from low energy density that remains far from Li-ion micro-batteries [15-17]. A significant improvement of their volumetric/areal energy density is needed for more challenging applications.

Document US-A1-2013/295461 discloses a method comprising forming a nanoporous gold conductive layer and depositing a MnO₂ capacitive material within the nanopores of said nanoporous gold conductive layer through a thickness of said nanoporous gold conductive layer.

An electrical energy storage micro-device has a limited surface area available on the electronic circuit. The capacitance and the energy of the micro-supercapacitor normalized to its footprint area on the chip should thus be considered. Up to now, despite their excellent power performances, the reported specific capacitances of micro-supercapacitors, in the range of mF/cm², fall far short of being able to power a wireless sensor node or any microelectronic device. The performance of micro-supercapacitors is indeed limited by the thickness and loading of the electrodes' active layer.

There is still a need in the art for a method for forming a porous electrode suitable for fabrication of micro supercapacitors. SUMMARY OF THE INVENTION

More specifically in accordance with the present invention, there is provided a method according to claim 1. Further embodiments of the invention are described in the dependent claims.

Other objects, advantages and features of the present invention will become more apparent upon reading of the following non-restrictive description of specific embodiments thereof, accompanied by explanatory examples, given with reference to the accompanying drawings.

### BRIEF DESCRIPTION OF THE DRAWINGS

In the appended drawings:
FIG. 1A shows cyclic voltammograms (CVs) of unmodified Au thin film(dark) and mesoporous Au (light) for 3 min + 1 min OCV +40 min in 0.5 M H₂SO₄ at 50 mV.s⁻¹;
FIG. 1B shows a top view scanning electron microscopy (SEM) images of porous gold at a first magnification;
FIG. 1C the view of FIG. 1B at a second magnification;
FIG. 2A is a cross-section SEM image of the porous gold layer;
FIG. 2B is a cross-section SEM image of a gold porous substrate (see FIG. 2A) after RuO₂·xH₂O electrodeposition;
FIG. 3A shows EIS measurements, Nyquist plot of porous gold/ RuO₂·xH₂O electrode in sulfuric acid 0.5 M;
FIG. 3B shows a cyclic voltammogram of the electrode at 0.1 mV.s⁻¹ in sulfuric acid 0.5 M;
FIG. 3C shows the variation of the voltammetric charge (Q*) with variation of sweep rates (Q* vs. v^{-1/2});
FIG. 3D shows the variation of the voltammetric charge (Q*⁻¹) with variation of sweep rates (Q*⁻¹vs. v^{1/2});
FIG. 4A shows galvanostatic charge/discharge curves at 1.5 mA.cm⁻² of a porous Au / RuO₂·xH₂O device according to an embodiment of an aspect of the present invention;
FIG. 4B shows the evolution of the relative capacitance vs. the number of potential sweep at 1.5 mA.cm⁻² as well as a schematic device according to an embodiment of an aspect of the present invention;
FIG. 4C shows a self-discharge curve of a porous Au/RuO₂·xH₂O device according to an embodiment of an aspect of the present invention;
FIG. 4D shows a comparison, in a Ragone plot, of the specific energy and power densitiy of a porous gold / RuO₂·xH₂O device according to an embodiment of an aspect of the present invention with state-of-the-art micro-batteries and commercial Li thin-film batteries;
FIG. 5A shows SEM micrograph of a top view of an Au porous layer obtained with t₁= 2 min, t₂= 1 min and t₃ = 10 min;
FIG. 5B shows a SEM micrograph of a cross section of the layer of FIG. 5A;
FIG. 5C shows a SEM micrograph of a top view of an Au porous layer obtained with t₁= 2 min, t₂= 1 min and t₃ = 30 min;
FIG. 5D shows a SEM micrograph of a cross section of the layer of FIG. 5C;
FIG. 5E shows a SEM micrograph of a to view of an Au porous layer obtained with t₁= 2 min, t₂= 1 min and t₃ = 50 min;
FIG. 5F shows a SEM micrograph of a cross section of the layer of FIG. 5D;
FIG. 5G shows the values of the electrochemical active surface area (EASA) as a function of the deposition time t₃ of FIG. 5A-5F;
FIG. 6A shows a SEM micrograph of a top view of an Au porous layers obtained with an initiation time t₁ of 1.0 min and t₃ = 20 min;
FIG. 6B shows a SEM micrograph of a top view of an Au porous layers obtained with an initiation time t₁ of 2.0 and t₃ = 20 min;
FIG. 6C shows a SEM micrograph of a top view of an Au porous layers obtained with an initiation time t₁ of 3.0 minutes and a deposition time t₃ = 20 min;
FIG. 6D shows the values of the electrochemical active surface area (EASA) as a function of the initiation time t₁ of FIG. 6A-6D;
FIG. 7A shows a SEM micrograph of a cross-section view of the bare porous Au layer, the insert showing a SEM micrograph of the same;
FIG. 7B shows a SEM micrograph of a cross-section view of the bare porous Au layer after deposition (100 cycles) of RuO₂ xH₂O;
FIG. 7C shows a SEM micrograph of a cross-section view of the bare porous Au layer after deposition (200 cycles) of RuO₂ xH₂O, the insert shows a SEM micrograph of the same;
FIG. 8 shows Table I, summarizing performances of various systems reported in the prior art, and, for comparison, results obtained with the present method as the last entry;
FIG. 9 is a diagrammatic view of a method according to an embodiment of an aspect of the present invention;
FIG. 10A shows a first step of the method of FIG. 9;
FIG. 10B shows a top view SEM image of the structure of FIG. 10A;
FIG. 10C shows a SEM image of a top view of the porous Au layer formed according to the structure of FIG. 10A;
FIG. 10D shows cyclic voltammograms (CVs) of the Au starting substrate (light) and of the Au porous structure (dark);
FIG. 11 is a schematic view of a structure of step 2 of the method of FIG. 9;
FIG. 12A is a schematic view of a final structure of the method of FIG. 9;
FIG. 12B shows a top view SEM image of the surface of the structure of FIG. 12A;
FIG. 12C shows a top view SEM image of the surface of the structure of FIG. 12A;
FIG. 12D a cross-section SEM image of the surface of the structure of FIG. 12A;
FIG. 12E shows the structure of FIG. 12A;
FIG. 13A shows a Nyquist plot of the device resulting from the method of FIGs. 9-12;
FIG. 13B shows the cyclic voltammogram of the resulting device of the method of FIGs. 9-12;
FIG. 14A shows a cyclic voltamperogramm (CV) of porous Au-Cu alloy;
FIG. 14B shows a top view SEM image of Au-Cu alloy, the insert showing a higher magnification of the same;
FIG. 14C shows a cyclic voltamperogramm (CV) of a porous de-alloyed (Au(-Cu)), with corresponding surface area;
FIG. 14D show top view SEM images of porous gold after copper de-alloying, the insert showing a higher magnification of the same;
FIG. 15A shows the evolution of the lattice constant of as-deposited (AuCu) and de-alloyed (Au(-Cu)) calculated by using Bragg's law;
FIG. 15B shows the evolution of the crystallite size of as-deposited (AuCu) and de-alloyed (Au-(Cu)) as measured by the Scherrer formula;
FIG. 15C shows the elemental composition of the AuCu and (Au(-Cu)) deposits determined by EDX and XRD analysis;
Fig. 15D shows the evolution of the roughness factor of de-alloyed (Au(-Cu)) as a function of the deposition potential;
FIG. 16A shows the effect of the number of RuO₂ electrodeposition cycles on the capacitance of the porous (Au(-Cu)) / RuO₂ electrode capacitance, with (Au(-Cu)) samples electrodeposited at -1.5 and -3 V vs. SCE;
FIG. 16B shows the normalized capacitance of the porous (Au(-Cu)) / RuO₂ electrode as a function of the roughness factor;
FIG. 17A shows a Nyquist Plot of a typical (Au(-Cu)) porous electrode;
FIG. 17B shows cyclic voltammograms of a typical (Au(-Cu)) porous electrode in 0.5 M H₂SO₄ at different scan rate from 20 mV/s to 0.1 mV/s;
FIG. 17C shows the determination of the outer capacitance (Cₒ = 4.7 F/cm²) of a typical Au(-Cu)) porous electrode;
FIG. 17D shows the determination of the total capacitance (Cₜ = 5 F cm⁻²) of a dealloyed Au(-Cu)) porous electrode;
FIG. 18A is a Table listing deposition conditions for sputtering deposition of AuCu films according to an embodiment of an aspect of the invention;
FIG. 18B show plots of deposition rate of Ti, Cu and Au as a function of power;
FIG. 19A shows the compositions of the AuCu films prepared by sputtering according to an embodiment of an aspect of the invention;
FIG. 19B shows how the lattice parameter of the fcc phase varies with the Au content;
FIG. 20A show XRD curves of (Au₁₀Cu₉₀) films prepared by sputtering, as deposited and after etching;
FIG. 20B show XRD curves of (Au₁Cu₉₉) films prepared by sputtering, as deposited and after etching;
FIG. 21A shows XRD curves of (Au₁₅Cu₈₅) films prepared by sputtering, as deposited and after etching;
FIG. 21B shows XRD curves (Au₂₄Cu₇₆) films prepared by sputtering, as deposited and after etching;
FIG. 21C show XRD curves of (Au₃₁₄Cu₆₉) films prepared by sputtering, as deposited and after etching;
FIG. 22A is a scanning electron microscopy image of Cu₄₀Au₆₀ thin film prepared by sputtering deposition, as deposited;
FIG. 22B is a scanning electron microscopy image of the thin film of FIG. 22A, after etching;
FIG. 23A is a scanning electron microscopy image of Cu₄₀Au₆₀ thin film prepared by sputtering deposition., as deposited; and
FIG. 23B is a scanning electron microscopy image of the thin film of FIG. 23A, after etching;

### DESCRIPTION OF EMBODIMENTS OF THE INVENTION

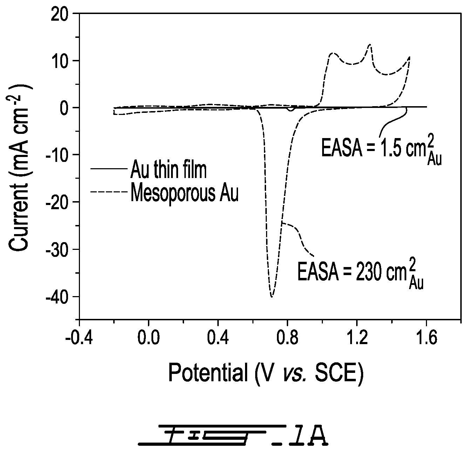

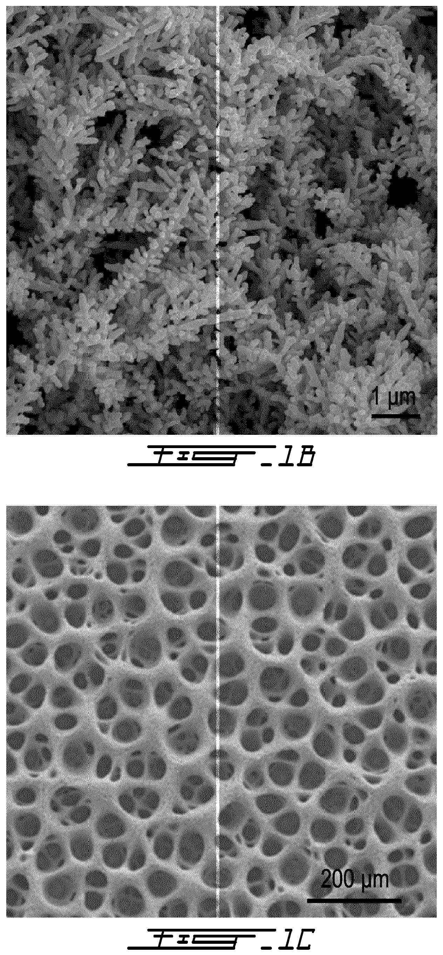

According to an embodiment of the invention described in relation to FIGs. 1 to 8, a mesoporous gold electrode was fabricated by electrodeposition in a two-step procedure (t1, t3 as described hereinbelow), in which gold current collectors are sculptured using the hydrogen bubble dynamic template synthesis [33, 40, 41], followed by the electrodeposition of hydrous ruthenium oxide.

More precisely, a porous gold coating was deposited on a substrate by electroplating. Electroplating is typically performed at a very negative potential and hydrogen release occurs simultaneously with deposition of the layer of metal. This method is referred to in the art as "dynamic hydrogen bubble templating". The porous Au coating was thus prepared by electrochemical deposition onto an evaporated gold thin film as a substrate in a tetrachloroaurate (HAuCl₄.xH₂O) acidic solution, i.e. a 2mM HAuCl₄*.3H₂O + 2M H₂SO₄ solution. Deposition was performed at a high negative potential, i.e. in a range between -1.5 V and -5 V vs saturated calomel electrode (SCE), for example -1.5 V *vs SCE,* following a sequence where the electrode is first polarized during t₁, then the electrode was left to open circuit potential during t₂ = 1 minute, and then the electrode was polarized again during t₃. Strong hydrogen evolution and bubble formation was observed at the surface of the electrode when it was polarized (t₁ and t₃), perturbing the diffusion layer and the localized current density thereby affecting Au growth morphologies and resulting in resulting in the desired porous Au structures.

The specific experimental parameters for this exemplary gold porous layer fabrication were as follows: a gold sputtered Si wafer of a geometric area of 1 cm², a platinum grid, and a saturated calomel electrode (SCE) were employed as working, counter and reference electrodes, respectively. Prior to use, the working electrode was electrochemically pre-treated by cycling the potential between -0.3 V and 1.7 V in 1 M H₂SO₄ at a scan rate of 100 mV.s⁻¹ until a stable voltammogram was obtained. Electrodeposition of gold occurred in 2mM HAuCl₄.3H₂O and 2M H₂SO₄ containing solution, applying -1.5 V vs. SCE for t₁= 3 minutes as initiation time, followed by t₂=1 minute open circuit and t₃= 40 minutes of deposition time.

FIG. 1A displays the corresponding steady state cyclic voltammograms (CV) obtained for the gold substrate (dark curve) and for the electrodeposited porous Au layer (light curve). Both CVs exhibit a typical Au electrochemical response in sulphuric acid solution, with a double layer in the potential region between -0.20 and 0.50 V and an Au oxide formation/reduction in the potential region between 0.60 and 1.60 V. The gold oxide formation only occurs above 1.0 V vs. SCE, suggesting the electrodeposited porous Au layer has an electrochemical stability required for a subsequent RuO₂ deposition and will provide good mechanical stability during cycling. Moreover, it can be seen that the magnitude of the Au oxide reduction peak for this electrodeposited porous Au layer with Q_{Au porous} = 92 mC, and thus the associated charge, centered at 0.70 V in the cathodic sweep in FIG. 1A, is significantly higher than that of the gold thin film of the substrate with Q_{Au} = 0.54 mC. From the coulombic charge involved in such reduction process, the electrochemical active surface area (EASA) was determined. The specific charge for the Au oxide reduction of 1cm² of Au is 400 µC/cm² [34]. This corresponds to 1.5 cm²_{Au} and 230 cm²_{Au} for bare gold and porous gold deposits, respectively. These values are most often reported as a roughness factor (R_{f}), i.e. a ratio of the real surface area to the geometric surface area (1 cm²). Accordingly, the roughness factor R_{f} values of the bare gold, i.e. the substrate, and of the electrodeposited porous gold layer here are 1.5 and 230, respectively: the roughness factor R_{f} value of the electrodeposited porous gold layer is 150 times larger than that of the Au thin film on which it was deposited.

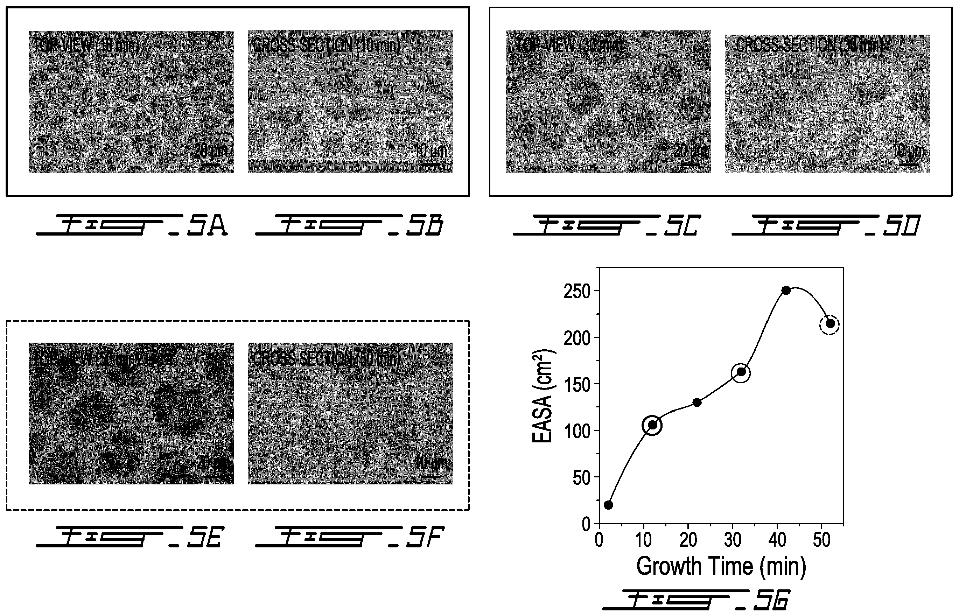

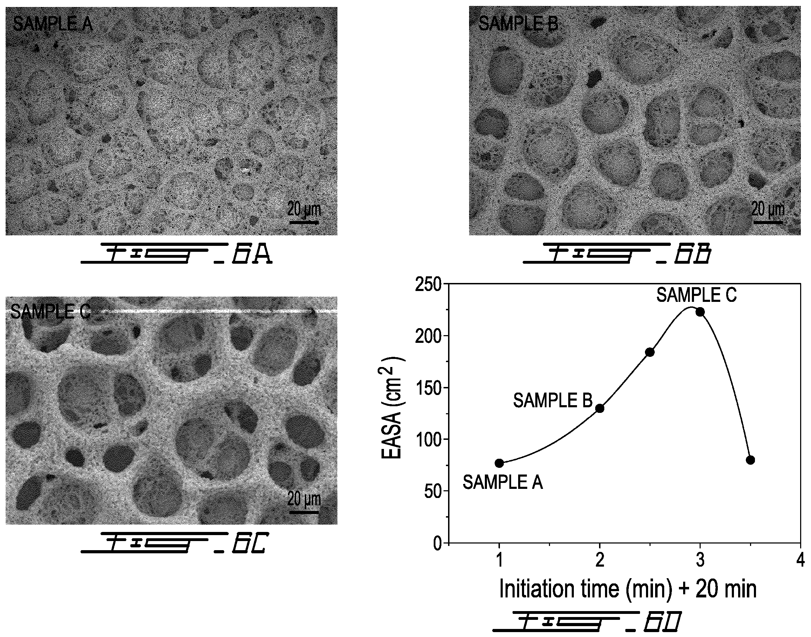

The scanning electron microscopy (SEM) micrographs of FIGs. 1B and 1C shows the cross section and the top of a porous gold layer electrodeposited as describe hereinabove with t₁ = 3 min and t₃ = 40 min. They show that the electrodeposited porous gold layer consists of a layered type structure, and that the pore size increases from the bottom, i.e. at the level of the substrate on which it is deposited, to the top thereof, and with pores that are interconnected and cross linked. The diameter of the pores varies from 20 to 40 µm with an internal wall structure composed of multi-branched dendrites and nodules. More details on the influence of the electrodeposition parameters, i.e. the initiation time (t1) and the deposition or growth time (t3) are described hereinbelow in relation to FIGs. 5 and 6.

This electrodeposited porous gold layer was in turn used as a substrate for electrodeposition of ruthenium oxide.

Hydrous ruthenium oxide, RuO₂·xH₂O, was electrodeposited on the porous Au layer through cyclic voltammetric at 50 mV s⁻¹ between -0.30 V and 0.95 V vs SCE. The deposition solution was RuCl₃.3H₂O (5mM) at pH = 2.5 and T = 50°C. The number of cycles was typically varied between 50 and 600. Then, the sample was annealed in air at 150 °C during 1h.

The specific experimental parameters for this exemplary RuO₂·xH₂O electrodeposition were as follows: the gold porous substrate of a geometric area 1 cm², a platinum grid, and a saturated calomel electrode (SCE) were employed as working, counter and reference electrodes, respectively. Electrodeposition occurred in a 5mM RuCl₃, xH₂0 containing solution adjusted to pH = 2.5 with a 2M KOH aqueous solution. The substrate was cycled between - 0.3 and + 0.9 V vs. SCE for 300 sweep potential, at temperature = 50°C under stirring in order to induce the growth of the RuO₂ deposits. Electrode has been systematically annealed under air at 150 °C for 1h after RuO₂ electrodeposition process.

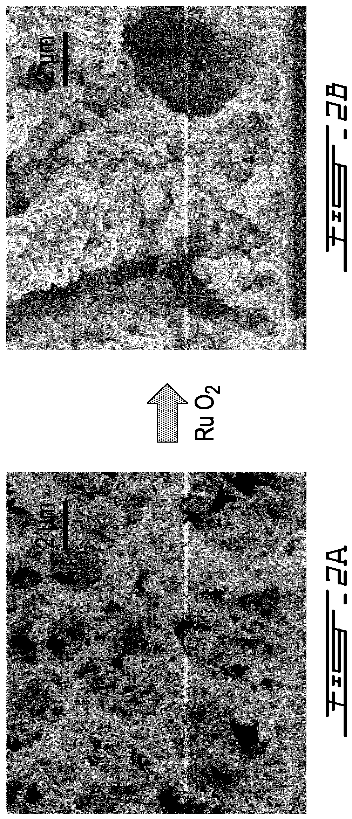

Along the 300 cycles, the current intensity steadily increases resulting from the continuous growth of amorphous oxy-hydroxide Ru layers (see FIGs. 5) [35, 36]. The morphology of the RuO₂·xH₂O electrodeposit onto the porous gold layer is shown in FIGs. 2. The cross section SEM images of the porous gold layer alone (FIG. 2A) and of the porous gold layer once covered with the electrodeposited RuO₂·xH₂O (FIG. 2B) show that the pseudo-capacitive hydrated RuO₂·xH₂O particles have been electrodeposited all along the nodules of the porous gold layer, on the whole thickness thereof, from the bottom to the top of the porous structure of the gold layer. Comparing both structures shows that once the gold surface is fully covered by RuO₂·xH₂O, the pore density is smaller and only open porosity is observed.

The obtained structure thus consists of a porous gold layer on which RuO₂·xH₂O was deposited (as described hereinabove), with a geometrical surface area of about 1 cm².

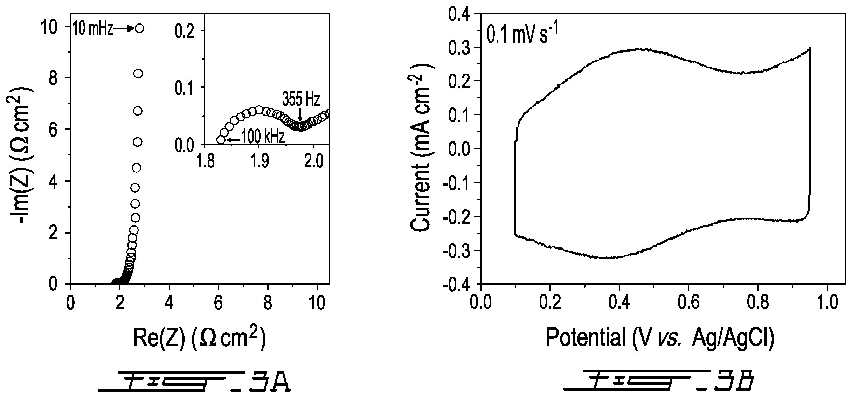

Electrochemical Impedance Spectroscopy measurements on these resulting structures were achieved at an open circuit potential in the 100 kHz to 10 mHz frequency range. FIG. 3A shows the Nyquist plot in sulphuric acid for the porous Au/ RuO₂·xH₂O structure without any leakage current observed. Moreover, the quasi-vertical straight line in the low-frequency region typically indicates a capacitive behaviour, while the semi-circle at high frequencies may indicate a blocking behaviour. This impedance plot is similar to that of a transmission line model (TLM) for porous electrodes proposed by Conway [37, 38]. From FIG. 3A, a negligible equivalent distributed resistance (EDR) value of 0.15 Ω.cm² can be derived, arising from the porous nature of the electrode material, as well as a suitable equivalent series resistance (ESR) value of 1.83 Ω.cm², caused by the diffusion of ions through the pores.

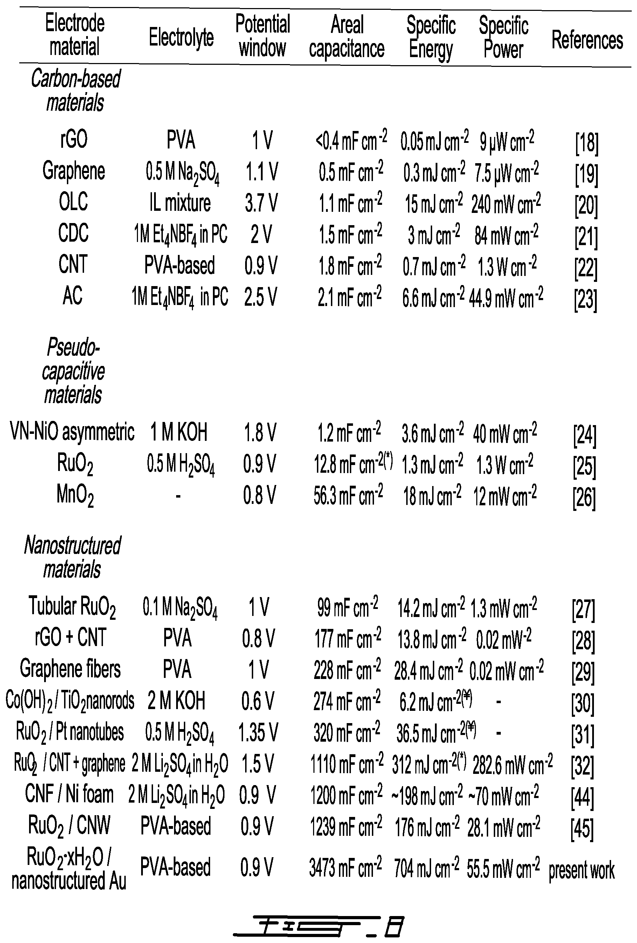

The electrochemical performances of this electrode made of the porous gold current collector covered with RuO₂·xH₂O particles were then evaluated using cyclic voltammograms (CV). In sulphuric acid, the CV for this porous Au/ RuO₂·xH₂O (FIG. 3B) shows a roughly rectangular shape, which is the typical electrochemical behaviour of pseudo capacitive amorphous RuO₂·xH₂O, the two quasi symmetric peaks around 0.40 V originating from the progressive change in the oxidation state of ruthenium. The specific capacitance exhibits an extremely high capacitance of 3250 mF.cm⁻² obtained at 0.1 mV.s⁻¹, corresponding to energy density values above 1 J.cm⁻², which compares favorably to value for a microsupercapacitor electrode as known in the art (see Table I in FIG. 8).

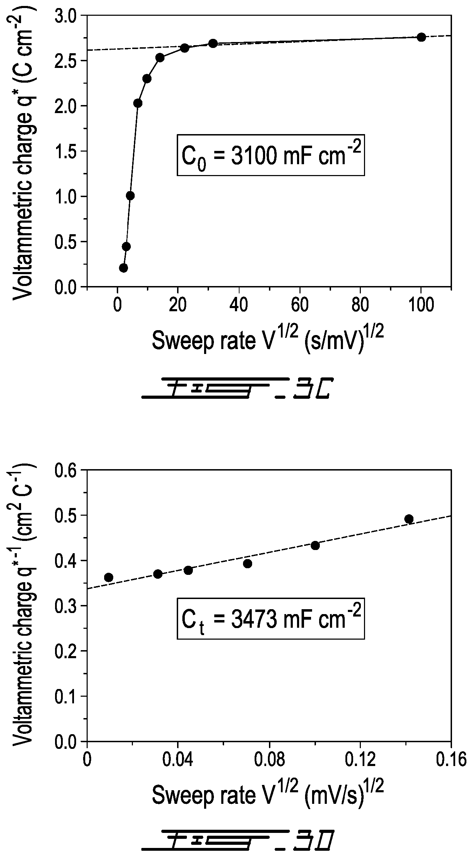

To complete the study of the obtained electrode, the accessibility of charges has been investigated as developed by Trasatti [42, 43] to identify the outer charge Qₒᵤₜₑᵣ, related to the more accessible active sites. The voltammetric charge Q* has been calculated as a function of the sweep rates (v). The value of the outer charge Qₒᵤₜₑᵣ was obtained from the extrapolation of the voltammetric charge Q* to v = ∞ (FIG. 3C), whereas the total charge has been estimated from the extrapolation the of voltammetric charge Q* to v = 0 (FIG. 3D). From those extrapolations a value for the outer charge Qₒᵤₜₑᵣ of 2.64 C.cm⁻² (3.47 F cm⁻²) was obtained for a total charge of 2.95 C.cm⁻² (3.47 F.cm⁻²). This value of the outer charge Qₒᵤₜₑᵣ represents therefore 90 % of the total charge, meaning that most of the total storable charge of the electrode is rapidly accessible, fulfilling a substantial requirement for a supercapacitor.

Therefore, a porous gold/RuO₂·xH₂O electrode which displays an unprecedented performance for a supercapacitor electrode was thus obtained. While reported capacitance for thin RuO₂·xH₂O film reaches tens of mF.cm⁻² [39], it can be assumed that the capability to access about 90% of the charges and the significant areal capacitance of 3.25 F.cm⁻² for the present porous gold/RuO₂·xH₂O electrode are mainly due to the porous structure of the gold substrate morphology, which allows RuO₂·xH₂O to access the small porosity through the open pores.

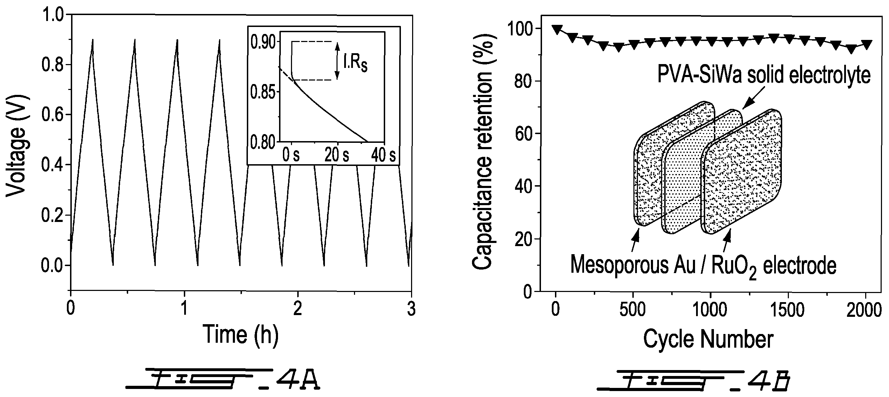

The porous gold substrate combined with the electrodeposited RuO₂·xH₂O give rise to the realisation of an all-solid-state supercapacitor in a stack configuration. For example, a stacked structure, comprising two Au/ RuO₂·xH₂O electrodes, with an electrochemical active surface area (EASA) of 230 cm² and an areal capacitance of 3.20 F.cm⁻², separated by a membrane of cellulose nitrate impregnated with a solid electrolyte, was built up as schematically shown in the insert in FIG. 4B, and characterized through electrochemical measurements.

The specific experimental parameters used for this exemplary porous Au/RuO₂·xH₂O supercapacitor device fabrication were as follows: two symmetric electrodes were fabricated in the same conditions and set up in stack mode. A PVA-H₃PO₄-polymer solid electrolyte doped with silicotungstic acid (SiWa) was prepared by mixing a poly(vinylalcohol) (PVA, Mw = 31 000-50 000, 87-89% hydrolyzed) solution with phosphoric acid (H₃PO₄) and SiWa (H₄SiW₁₂O₄₀) in a composition of 1.7 wt% PVA, 1.9 wt% H₃PO₄, 14.4wt% SiWa and 82 wt% de-ionized water. The conductivity of the solid electrolyte was 6.1 mS.cm⁻¹ after 24 h (22.2 °C - 32% RH).

FIG. 4A shows a galvanostatic charge/discharge curve at 1.5 mA.cm⁻² of the stacked structure. A remarkable specific capacitance around 1220 mF.cm⁻² is determined with a negligible Ohmic drop (35mV) during the discharge sweep. From this curve, the specific energy density delivered by this solid-state porous Au/RuO₂·xH₂O symmetric micro-supercapacitor can be calculated as 494 mJ.cm⁻² and the power density as 7.9 mW.cm⁻². Those results exceed best known devices in terms of areal power density with quite high areal energy density (see Table I in FIG. 8).

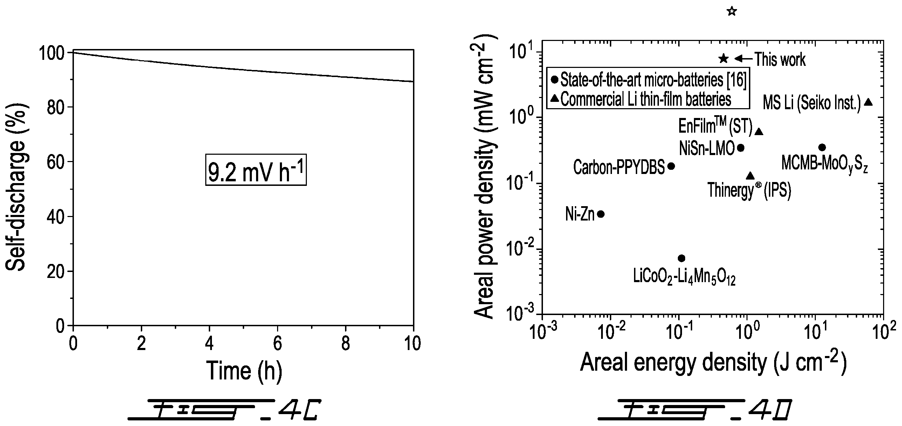

FIG. 4B shows an important capacitance retention of about 90 % after over 2000 potential sweeps, evidencing a good cycle-life stability for the device. This micro-supercapacitor also exhibits a very low self-discharge of about 9.2 mV.h⁻¹, as can be seen from FIG. 4C. This electrochemical stability hints that the morphology of the porous Au/RuO₂·xH₂O electrode is maintained during repetitive charge/discharge cycles. A Ragone plot (FIG. 4D) of the device in comparison with micro-batteries further shows that this porous Au/RuO₂·xH₂O device is positioned remarkably high in terms of areal power density versus areal energy densities when compared to micro-batteries of the prior art [27, 28, 30].

Some tests were performed to assess the influence of the deposition or growth time t₃, by varying the deposition time t₃. Thus the deposition time t₃ was varied (t₃ = 10, 20, 30, 40 and 50 minutes) at a fixed initiation time t₁ (2 minutes), in the case of deposition conditions of an Au thin film in about 100 mL of 2mM HAuCl₄.3H₂O + 2M H₂SO₄ solution. Deposition was performed at a high negative constant potential (-1.5 V *vs. SCE)* during initiation and deposition times. In between the two processes, open circuit conditions were maintained during one minute (t₂). The SEM micrographs of FIGs. 5 show cross section and top view images of Au porous layers with t₃ = 10, 30 and 50 minutes. It can be seen that the thickness of the Au porous layer and the pore diameter increase with the deposition time t₃. In FIG. 5G showing the values of the electrochemical active surface area (EASA) as a function of the deposition time t₃, it can be seen that the electrochemical active surface area (EASA) was optimum for a deposition time t₃ of 40 minutes.

The influence of the initiation time t₁ was also studied, by varying the initiation time t₁ (t₁ = 1.0, 2.0, 2.5, 3.0 and 3.5 minutes) at a deposition time t₃ fixed at 20 minutes, in case of deposition of an Au thin film in about 100 mL of 2mM HAuCl₄.3H₂O + 2M H₂SO₄ solution. Deposition was performed at high negative constant potential (-1.5 V *vs SCE)* during the initiation time t₁. The SEM micrographs of FIGs. 6A-6C show top view images of Au porous layers thus obtained with initiation times t₁ = 1.0, 2.0 and 3.0 minutes respectively. It appears that the initiation time affects the thickness of the gold layer as well as the pores diameter and boundaries. In FIG. 6C showing the values of the electrochemical active surface area (EASA) as a function of the initiation time t₁, it can be seen that the electrochemical active surface area (EASA) was optimum for an initiation time of t₁ = 3 minutes.

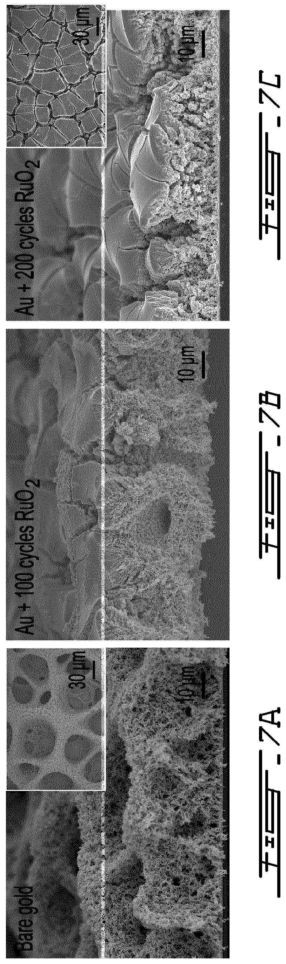

Various thicknesses of RuO₂·xH₂O deposited on a porous Au layer (FIG. 7A) were also characterized, as shown in FIGs. 7B and 7C. Fig. 7A shows a cross section view of the porous Au electrode. Fig. 7B shows that, during the first 100 cycles, deposition of RuO₂·xH₂O occurs throughout the whole thickness of the porous Au electrode. Fig. 7C shows that, upon prolonged deposition (200 cycles), deposition of RuO₂·xH₂O occurs also on the top of the electrode and the characteristic structure of the porous gold electrode (see the insert to Fig. 7A) is no longer observed. Instead, it is replaced by the characteristic morphology of the RuO₂·xH₂O deposit (see the insert to FIG. 7C).

The specific parameters of the electrochemical characterizations performed hereinabove were as follows: with a SP-240 potentiostat from BioLogic, all electrodes and devices have been characterized in 0.5M H₂SO₄, with a three-electrode electrochemical cell with a platinum grid and a saturated calomel electrode (SCE) as counter electrode and reference electrode respectively. Scanning Electron Microscopy (SEM) was performed using a Hitachi S-4800 field emission electron microscope.

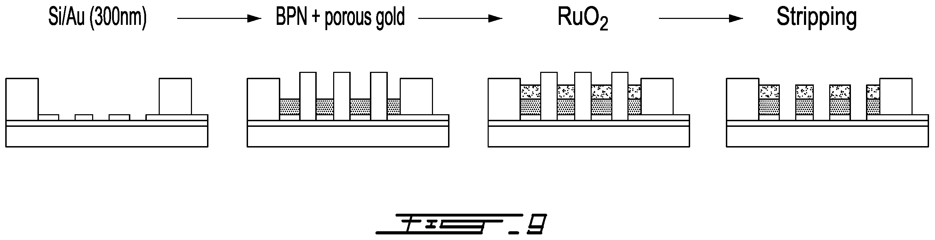

According to an embodiment of the invention described in relation to FIGs. 9 to 13, the porous Au/RuO₂ electrodes discussed in relation to Figure 1 to 8 are interdigitated.

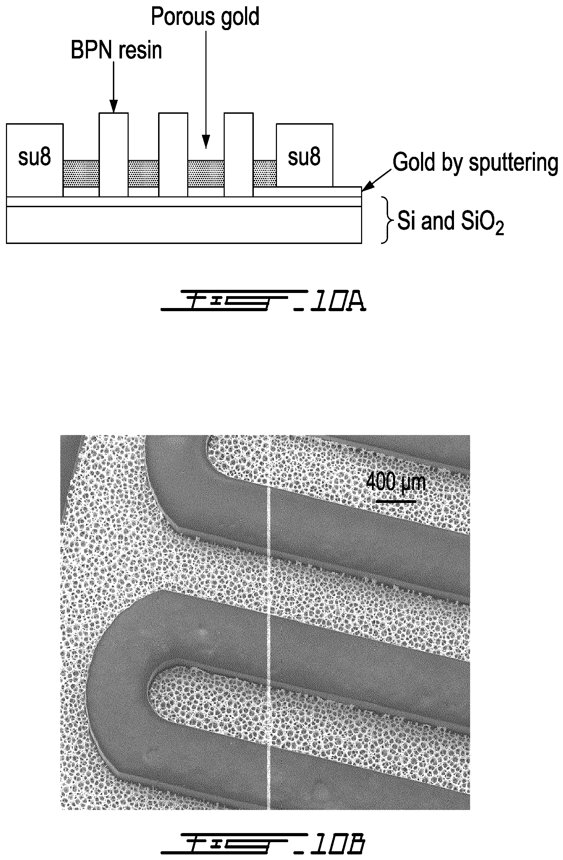

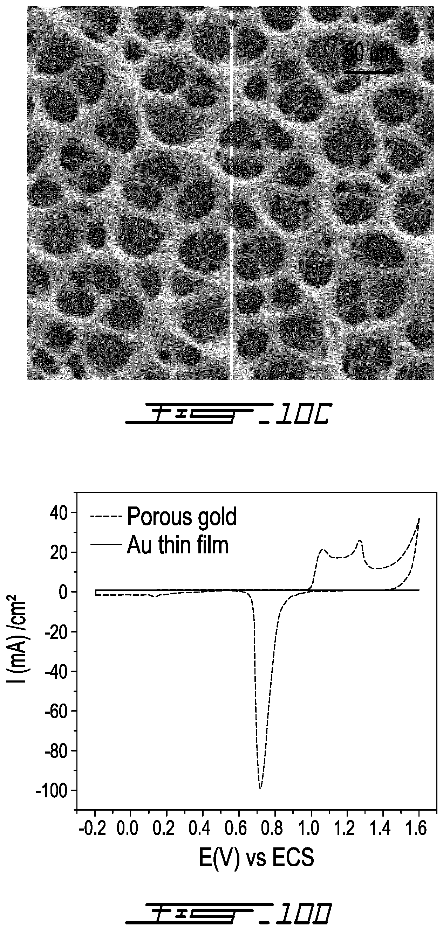

First, gold is evaporated on a wafer to form interdigitated electrodes, and a novolak negative resin-NQD-4 (BNP) resin is deposited, exposed and revealed to form a mask for interdigitated electrodes with an interspace between the positive and negative electrodes of 500 µm in this example. The BPN resin acts as a wall to protect the interspace from being covered during the subsequent deposition of Au and RuO₂.*x*H₂O, therefore presenting the establishment of a short circuit between both electrodes. Porous gold is then electrodeposited, by electrochemical deposition from a solution of 2mM HAuCl₄.3H₂O + 2M H₂SO₄. Deposition is performed at high negative potential (-1.5 vs SCE) and polarized for 20 min. FIG. 10A shows the resulting structure after the porous gold deposition, with the BPN resin in the interspace. FIG. 10B show a SEM image of a large section of the surface of the structure where both the porous gold electrodes and the BNP resin are observed. In FIG. 10C, the characteristic honeycomb-like structure of the porous Au electrode (80 µm thick), with open porosity (20-40µm) and dendrites (50-200nm) is observed. The gold substrate has been characterized by cyclic voltammetry (CV) in H₂SO₄ and an electrochemical active surface area of 442 cm² is measured (see FIG. 10D).

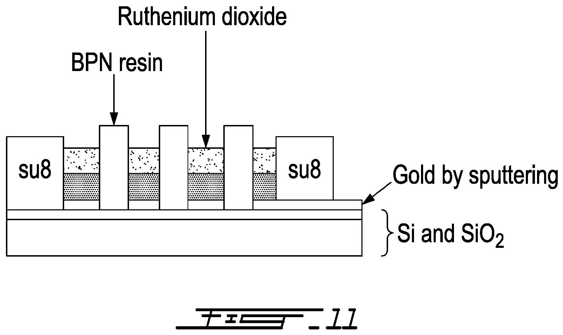

Electrodeposition of RuO₂.*x*H₂O is performed through cyclic voltammetry. In this step, the BPN resin is still present, electrochemical deposition of RuO₂.*x*H₂O is achieved on the gold porous substrate, following the same conditions, by cyclic voltammetry from an acidic solution of 5mM RuCl₃.3H₂O. Deposition is performed for 400 cycles at 50 mV.s⁻¹ between -0.3 V and 0.95 V vs SCE. The pH is fixed at 2.5 and the temperature is controlled at T=50°C (FIG. 11).

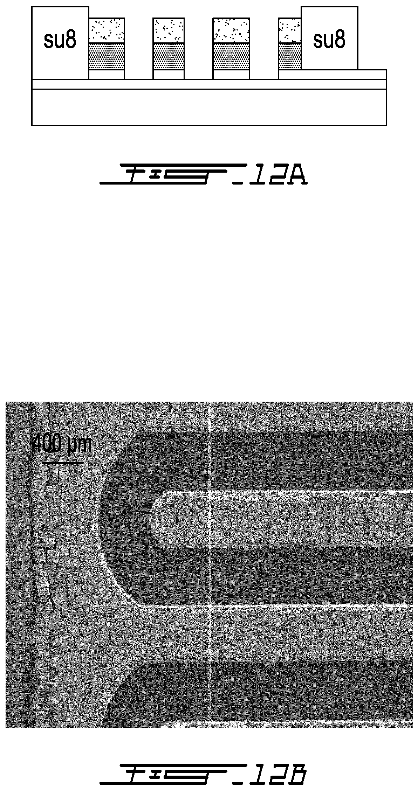

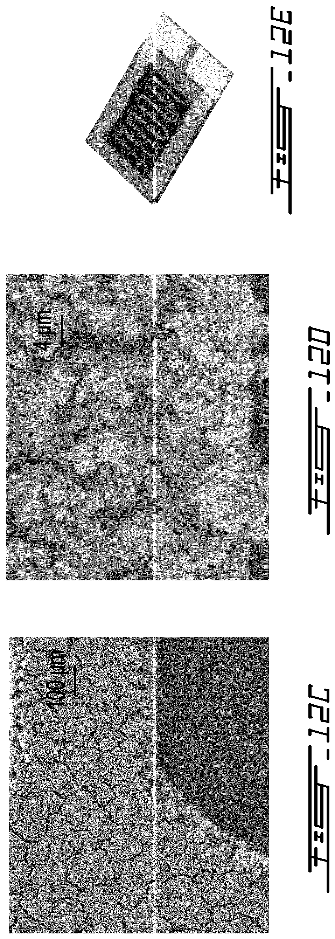

The last step of FIG. 9 is the stripping of BPN resin with a special solvent. Once the resin is removed, the RuO₂ is annealed in air at 150 °C for 1 hour. FIG. 12A shows the resulting structure with the porous Au/RuO₂.*x*H₂0 electrode after resin removal. FIG. 12B shows a low magnification top view SEM image of the resulting surface, showing a clean interspace between the adjacent fingers. FIG. 12C show a SEM image (top view) of the surface, showing that the porous gold structure is entirely covered with RuO₂.*x*H₂O. Fig. 12D (cross-section view) shows that RuO₂.*x*H₂O is deposited throughout the whole thickness of the porous Au layer. FIG. 12E is a photography of the actual device ready for electrochemical characterization.

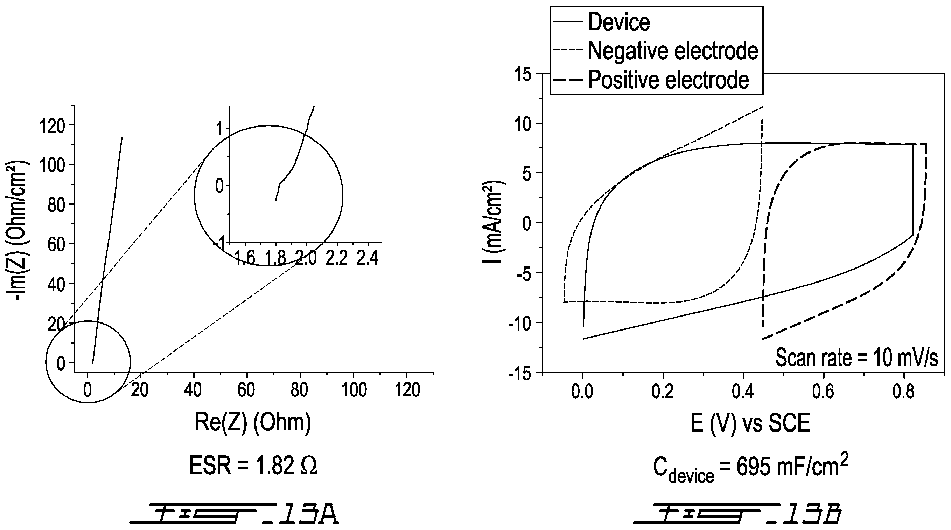

FIG. 13A show a typical Nyquist plot of the device of FIG. 12D. The electrochemical impedance spectroscopy is used to assess to ESR and EDR resistance (1.82 Ω). FIG. 13B shows the cyclic voltammogram of the resulting device of the method of FIG. 9, characterized in H₂SO₄ at a scan rate of 10 mV.s⁻¹. During the voltammetric sweep, charge and discharge of both positive and negative electrode has been recorded. These two CVs present rather symmetric behavior and the specific capacitance of the device is 695 mF/cm².

The successful commercialization of 3D micro-supercapacitors will depend on the feasibility of fabrication 3D electrode materials (porous gold herein) onto small-dimension substrates via micro-fabrication processes fully adequate to the silicon technology. The described embodiment shows fabrication of an interdigitated electrode. By using the BPN resin and photolithography technics, short circuits are avoided as well as RuO₂.xH₂O chemical deposits on non-desired locations. Very few studies have been reported in the literature on the integration of 3D interdigitated micro-supercapacitors ([27], [46], [47]). Specific energy obtained in the art range from 12 to 21 mJ/cm² compared with 281 mJ/cm² in the present interdigitated RuO₂/porous gold micro-supercapacitor (Figure 13B).

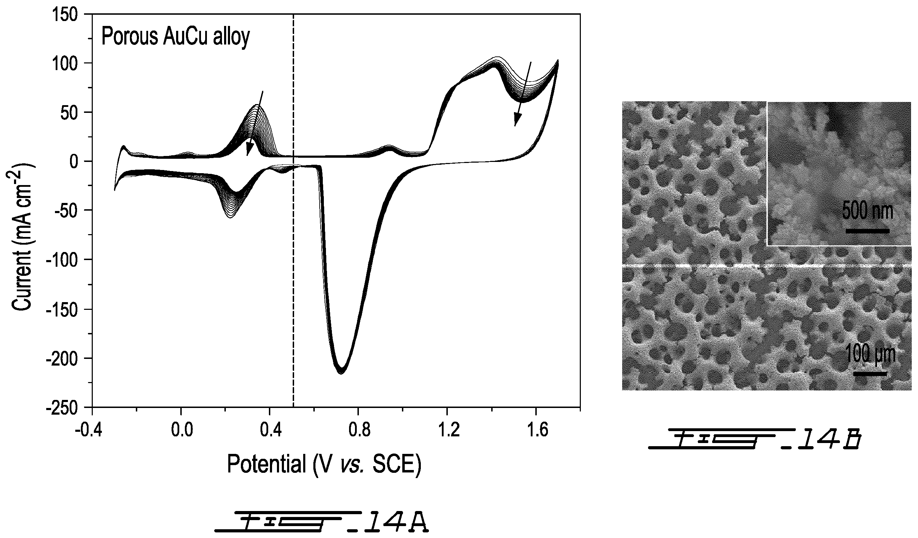

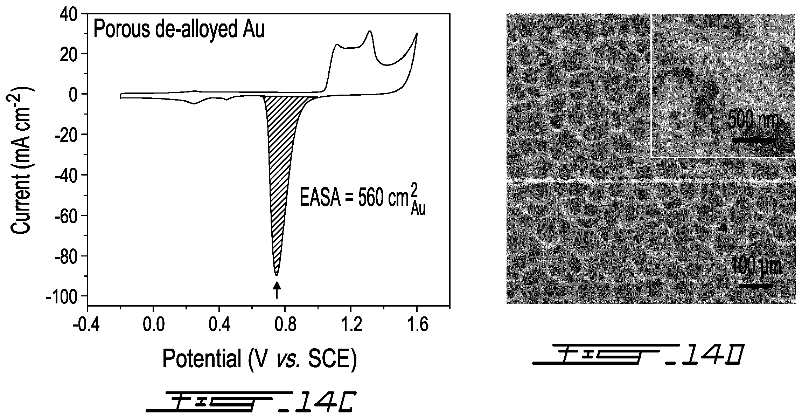

According to an example described for explanatory purposes in relation to FIGs. 14 to 17, a mixed layer of gold and copper is electrodeposited as described hereinabove in relation to FIGs, 1 to 8, prior to removal of the copper in order to further increase the porosity of the structure.

The mesoporous Au-Cu coating is prepared by electrochemical deposition of Au-Cu from a solution of 2mM HAuCl4*3H2O + 2mM CuSO4 + 2M H2SO4. Deposition is performed at high negative potential (-1.5 vs SCE) during 20 min. Strong hydrogen evolution and bubbles formation is observed at the surface of the electrode during polarization. Typical CVs of the resulting film are shown in FIG. 14A. The scanning electron microscopy (SEM) micrographs of FIG. 14B show the surface of a highly porous Au-Cu alloy formed as described previously. Dealloying is performed by chronoamperometry at 0.5V vs. SCE during 15 min. Then CVs are recorded in H₂SO₄ to resulting de-alloyed porous Au substrate. An electrochemical active surface area of 560 cm² is measured (FIG. 14C). FIG. 14D shows SEM images showing the porous gold structure after de-alloying.

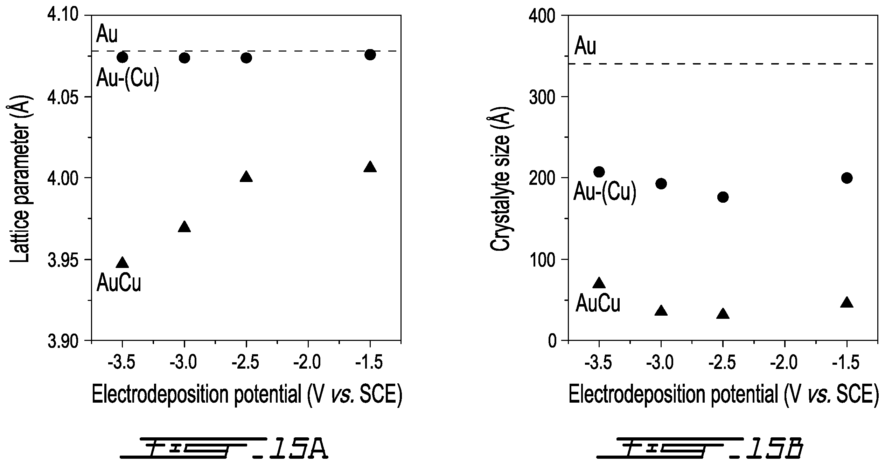

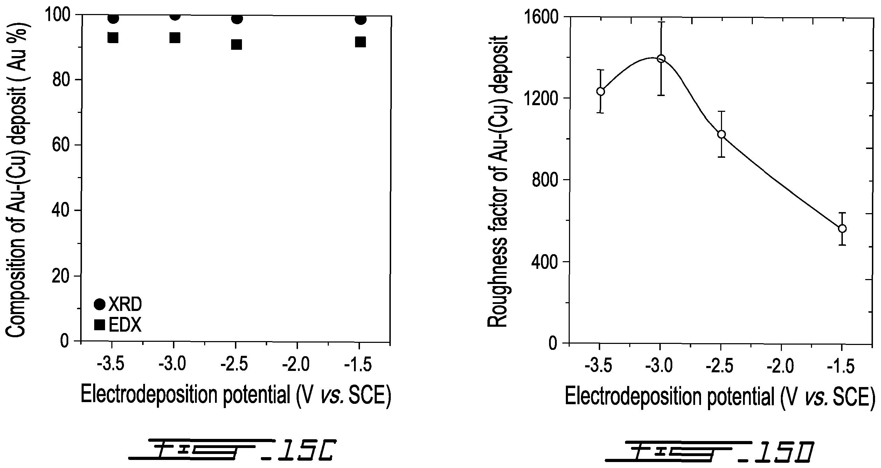

The evolution of the structural characteristics of the porous gold-copper (AuCu) alloy and porous dealloyed gold (Au(-Cu)) electrodeposited at different potentials is studied. FIG. 15A shows the evolution of the lattice constant calculated by using Bragg's law. The lattice parameter of Face-Centered Cubic (FCC) Au and Cu is 4.0786 and 3.625 Å, respectively. FIG. 15B shows the evolution of the crystallite size as measured by the Scherrer formula. FIG. 15C shows the elemental composition of the AuCu and (Au(-Cu)) deposits determined by EDX and XRD analysis. FIG. 15D shows the roughness factor determined from the electrochemical active surface area (EASA). All samples display extremely high roughness factor.

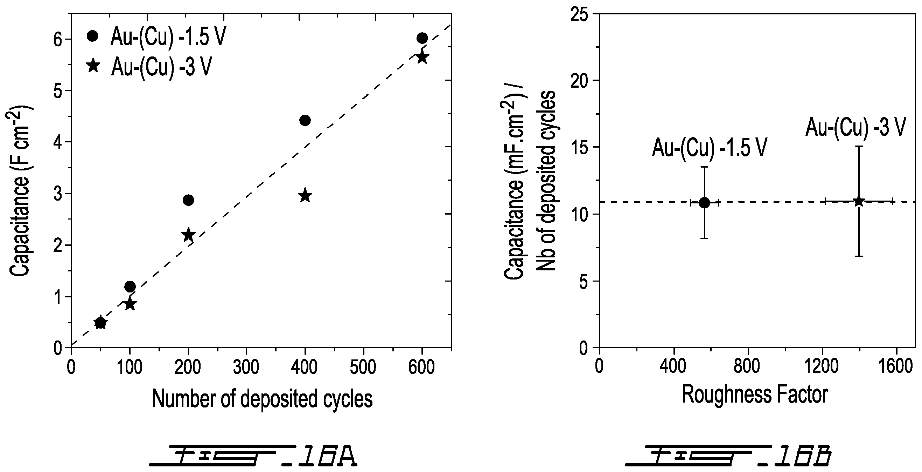

The variation of the capacitance of the electrode with respect to the number of cycles used for the deposition of RuO₂.*x*H₂O on Au(-Cu) substrates prepared at -1.5V and -3.0V vs. SCE was then studied (FIG. 16A). The specific capacitance of the electrode increases with increasing number of electrodeposition cycles up to 6 F.cm⁻² after 600 cycles. The capacitance was determined from CVs in H₂SO₄ recorded at 5 mV.s⁻¹. FIG. 16B shows the normalized capacitance of the electrodes as a function of the roughness factor. The normalized capacitance is given by the ratio between the capacitance of the electrode (FIG. 16A) and the number of cycles used for the deposition of RuO₂.*x*H₂O. The roughness of the Au(-Cu) electrode does not influence the normalized capacitance of the electrode.

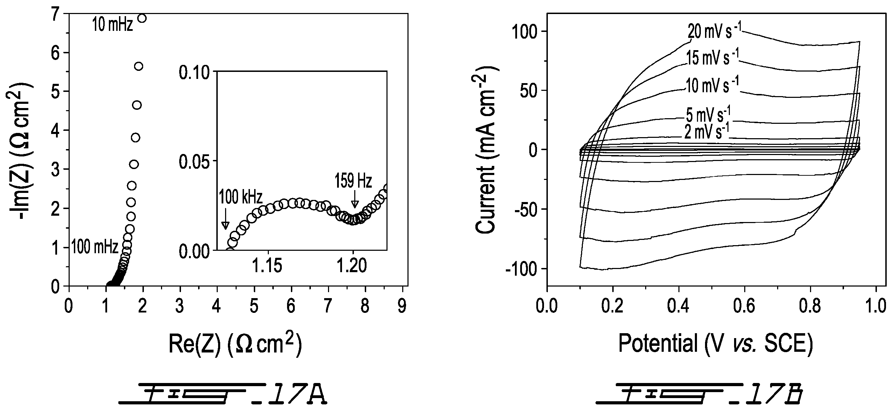

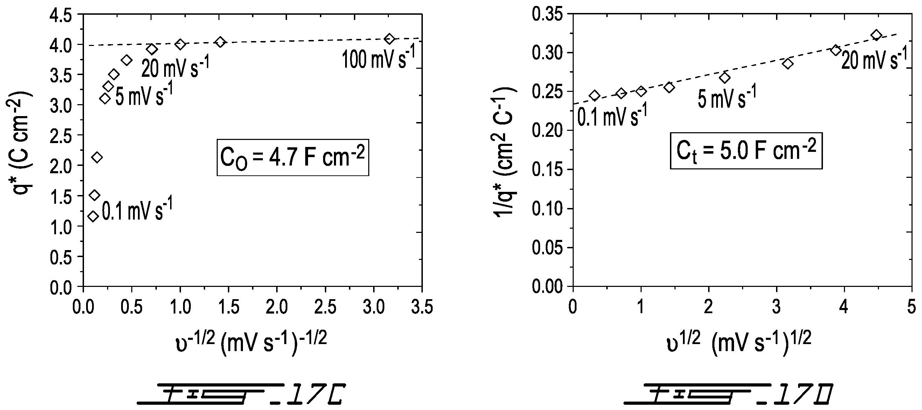

The porous (Au(-Cu)) / RuO₂.*x*H₂O electrode, consisting of a porous Au-(Cu) layer electrodeposited at -1.5 V vs. SCE for 20 min with 400 cycles of electrodeposited RuO₂.*x*H₂O, was electrochemically characterized. FIG. 17A shows a typical Nyquist Plot. The electrochemical Impedance spectroscopy data are used to assess to ESR and the EDR (1.13 Ω). FIG. 17B shows cyclic voltammograms of the electrode in 0.5 M H₂SO₄ at different scan rates from 20 mV/s to 0.1 mV/s. The capacitance of the electrode, calculated from the integration of the discharge in the negative going scan is 4.6 F/cm² (5mV/s). FIGs. 17C and D show the variation of the voltammetric charge as a function of v^{-1/2} and v^{1/2}, respectively. The voltammetric charge is obtained from the integration of the discharge of cyclic voltammograms. FIG. 17C shows the determination of the outer capacitance (Cₒ = 4.7 F cm⁻²) of the electrode. FIG. 17D shows the determination of the total capacitance (Cₜ = 5 F cm⁻²) of the electrode. An ultrahigh capacitance is obtained with 95% of this capacity value being easily accessible.

It is thus shown that it is possible to further increase the porosity of the porous Au electrode by using an electrodeposition bath that contains both Au and Cu cations, followed by a Cu dealloying step to leave beyond an extremely porous Au layer.

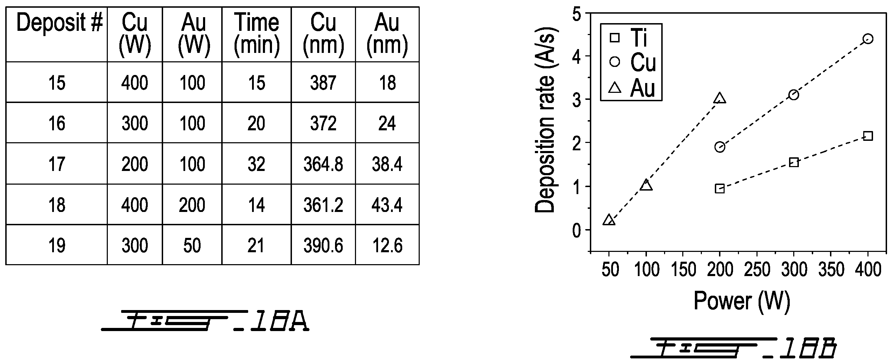

According to a further explanatory example described in relation to FIGs. 18 to 23 another approach is provided to form gold mesoporous nanostructures.

In the case of AuCu films prepared by sputtering deposition, FIG. 18B shows how the deposition rate of Ti, Cu and Au varies with power, with deposition conditions as listed in FIG. 18A for Ti (dc), Au (rf) and Cu (rf) targets, 10 rpm, under 4 mTorr Ar, on a Si wafer (4") with about 50 nm Ti. By varying the power on Au and Cu targets, it is thus possible to vary independently the deposition rates and thus the relative Cu and Au concentrations.

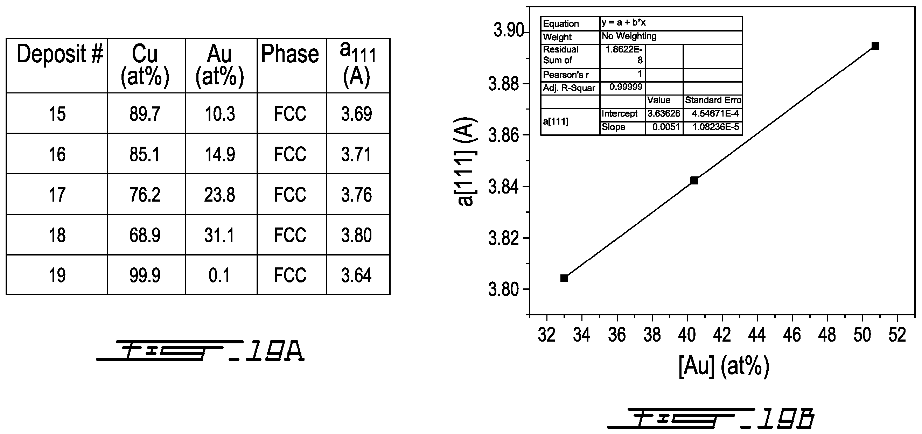

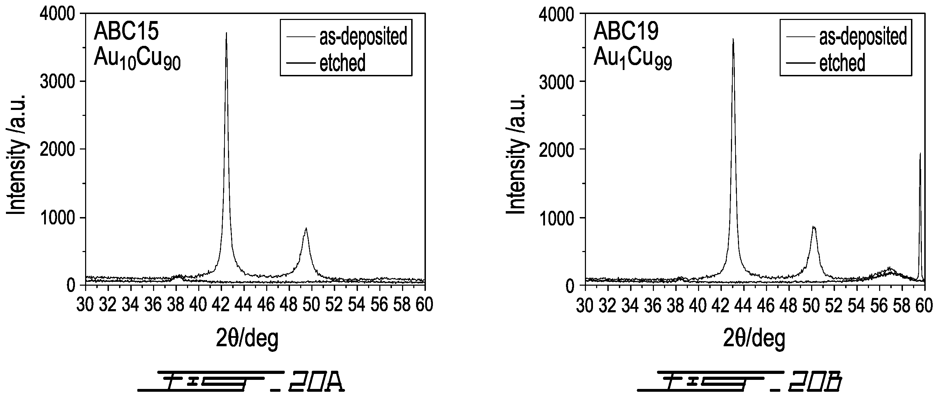

From XRD patterns (see FIGs. 20), it is possible to determine the lattice parameter of the fcc phase. FIG. 19A shows the compositions of the AuCu films prepared by sputtering above, calculated from calibration curve FIG. 19B shows how the lattice parameter of the fcc phase varies with the Au content. As expected, there is a linear relationship between both values

FIGs. 20 show XRD curves of AuCu films prepared by sputtering, as deposited and after etching in concentrated HNO₃ for 30 min. It can be seen that films that are too-rich in Cu are completely dissolved at the end of the period.

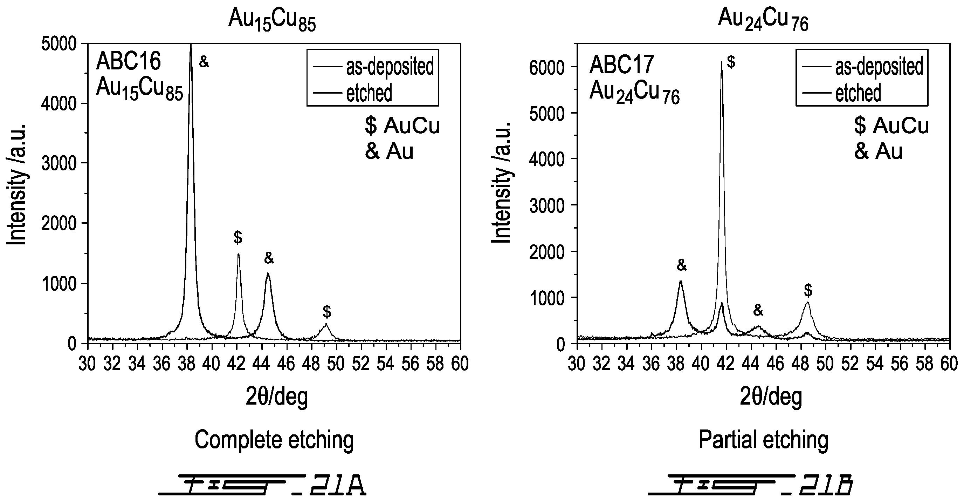

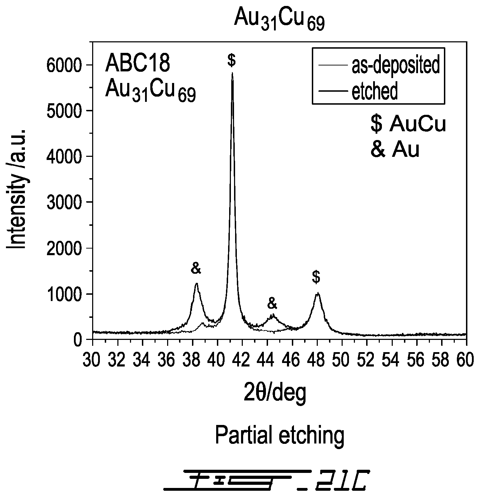

FIGs. 21 show XRD curves of AuCu films prepared by sputtering as deposited and after etching in concentrated HNO₃ for 30 min. A complete dealloying is observed for Cu=85 at% (FIG. 21A); for lower Cu content (FIGs. 21B, 21C), the etching time or the temperature could be increased to dissolve the remaining Cu atoms.

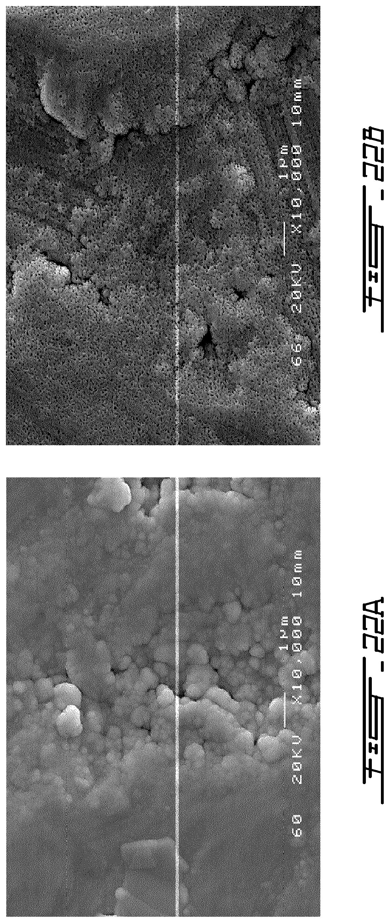

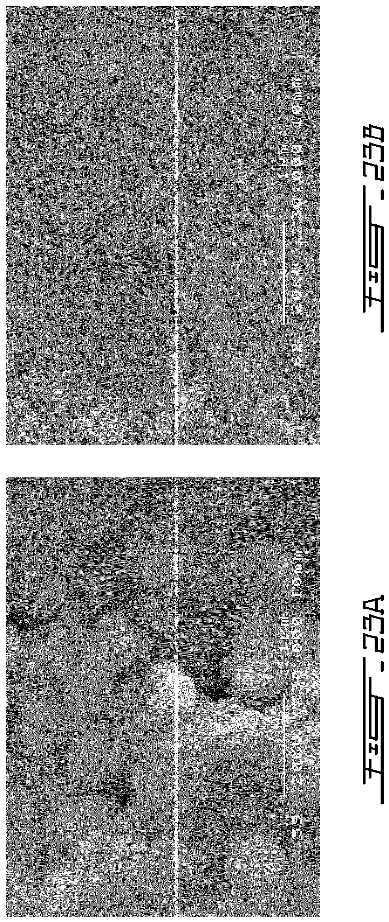

FIGs. 22 and 23 are scanning electron microscopy images of Cu₄₀Au₆₀ thin film prepared by sputtering deposition, as deposited (FIG. 22A, 23A) and after Cu etching (FIG. 22B, 23B). It appears that Cu dealloying leads to enhanced surface rigidity, with the apparition of mesopores homogeneously distributed at the surface of the film.

It was thus shown that porous Au films can be prepared by physical deposition method. Using sputtering, the deposition of a AuCu layer on top of the Au layer that is used to fabricate the interdigitated electrode could be prepared at once, in the same deposition system.

According to the invention, there is thus provided a method for fabricating structures having a three-dimensional network with a high aspect ratio, which allows more active materials to be loaded per unit area.

The resulting electrodes exhibit a high areal capacitance, in excess of 3 F cm⁻², and all-solid-state supercapacitors with an areal energy density comparable to that of state-of-the-art lithium-ion micro-batteries are made possible. Such porous gold/hydrous ruthenium oxide hybrid structure electrode provides an encouraging alternative for integration of high-performance micro-supercapacitors onto silicon chips, components in which per-area performance is critical.

The method comprises using a porous substrate, i.e. a conductive, porous layer of a material that is chemically and electrochemically stable, such as gold, as described hereinabove, or platinum or titanium for example, and a capacitive layer that is made of a capacitive material than can deposit within the pores of the porous layer and is chemically and electrochemically stable, such as RuO₂ as described hereinabove, or Ni, Fe, Co, Ir or Mn in the form of oxides or hydroxides for example. Electrodes with pores of a size in a range between 0.2 micrometers and 50 micrometers are achieved.

According to an explanatory example, the porous substrate may be prepared by using (i) physical deposition methods, such as AuCu, PtCu or TiCu sputtering, followed by selective dissolution of Cu; (ii) co-electrodeposition of AuCu, PtCu or TiCu with concomitant H₂ evolution, followed by selective dissolution of Cu, (iii) cyclic voltammetry deposition methods of AuCu, PtCu or TiCu, where the lower end of the potential cycle is selected to favor the deposition of both metal ions and the concomitant H₂ evolution while the upper end of the potential cycle is choose to selectively dissolve Cu, (iv) Au deposition with concomitant H₂ evolution in the pulsed potential mode, instead of the potentiostatic mode used in the embodiments described hereinabove, for example. The co-deposition of Cu-Au followed by Cu dissolution yields an increase of the roughness factor R_{f} of the porous gold layer. The layer obtained by depositing AuCu under vigorous hydrogen evolution followed by selective Cu dissolution had a roughness factor R_{f} value of 1000. Other sacrificial elements such as Ag, Al, Fe, Ni and Sb may be used.

According to an explanatory example, the porous substrate and the capacitive layer may be combined, for example by co-deposition by electrochemical methods of Ru and Cu under vigorous H₂ evolution followed by dissolution of Cu and conversion of Ru into RuO₂·xH₂O by electrochemical methods as described hereinabove. Other materials for such co-deposition and subsequent separation are Ni and Zn for example. Making microstructure by Ru glacing angle deposition (GLAD) and conversion of Ru into RuO₂·xH₂O by electrochemical methods may also be contemplated.

The use of the porous electrodes in other configurations than those described hereinabove may further be contemplated, such as in asymmetric supercapacitors, or as part of a device based on planar interdigitated electrodes as described hereinabove, or the aqueous solution can be replaced by ionic liquids to increase the potential window, for example.

### References

[1] Z.L. Wang, Adv. Mater. 24 (2012) 280-285.
[2] J. Chmiola, C. Largeot, P.L. Taberna, P. Simon, Y. Gogotsi, Science 328 (2010) 480-483.
[3] W Gao, N. Singh, L. Song, Z. Liu, AL. Mohana Reddy, L. Ci, R. Vajtai, Q. Zhang, B. Wei, P.M. Ajayan, Nat. Nanotech. 6 (2011) 496-500.
[4] M.F. El-Kady, R.B. Kaner, Nat. Comm. 4 (2012) 1475.
[5] Q Meng, H. Wu, Y Meng, K. Xie, Z. Wei, Z. Guo, Adv. Mater. 26 (2014) 4100-4106.
[6] 1. Nam, G.P. Kim, S. Park, J.W Han, J. Yi, Energy Environ. Sci. 7 (2014) 1095-1102.
[7] S.-K. Kim, H.-J. Koo, A. Lee, P.V. Braun, Advanced Materials vol. 26, issue 30, p. 5108-5112 (2014).
[8] D. Pech, M. Brunet, H. Durou, P. Huang, V. Mochalin, Y. Gogotsi, P.L. Taberna, P. Simon, Nat. Nanotech. 5 (2010) 651-654.
[9] K. Sheng, Y. Sun, C. Li, W Yuan, G. Shi, Sci. Rep. 2 (2012) 247.
[10] A. Ghosh, VI Le, J.J. Bae, Y.H. Lee, Sci. Rep. 3 (2013) 2939.
[11] Z.-S. Wu, K. Parvez, X. Feng, K. Müllen, Nat. Comm. 4 (2013) 2487.
[12] D. Pech, M. Brunet, T.M. Dinh, K. Armstrong, J. Gaudet, D. Guay, J. Power Sources 230 (2013) 230-235.
[13] T.M. Dinh, K. Armstrong, D. Guay, D. Pech, J. Mater. Chem. A 2 (2014) 7170-7174.
[14] ZS Wu, K. Parvez, X. Feng, K. Müllen, J. Mater. Chem. A 2 (2014) 8288-8293.
[15] H. Zhang, X. Yu, P.V. Braun, Nat. Nanotech. 6 (2011) 277-281.
[16] J.H. Pikul, H.G. Zhang, J. Cho, P.V. Braun, WP. King, Nat. Comm. 4 (2013) 1732.
[17] J. NA Kyeremateng, ChemElectroChem 1 (2014) 1442-1467.
[18] J.J. Yoo, K. Balakrishnan, J. Huang, V. Meunier, B.G. Sumpter, A. Srivastava, M. Conway, A.L. Mohana Reddy, J. Yu, R. Vajtai, P.M. Ajayan, Nano Lett. II (2011) 1423-1427.
[19] J.W. Liu, Y.Q. Feng, X.B. Yan, J.T. Chen, Q.J. Xue, Adv. Funct. Mater. 23 (2013) 411 1-4122.
[20] P. Huang, D. Pech, R. Lin, J.K. McDonough, M. Brunet, P.L. Taberna, Y. Gogotsi, P. Simon, Electrochem. Commun. 36 (2013) 53-56.
[21] P. Huang, M. Héon, D. Pech, M. Brunet, P.L. Taberna, Y. Gogotsi, S. Lolland, J.O. Hettinger, P. Simon, J. Power Sources 225 (2013) 240-244.
[22] T.M. Dinh, D. Pech, M. Brunet, A. Achour, J. Phys.: Conf. Ser 476 (2013) 012106.
[23] D. Pech, M. Brunet, P.L. Taberna, P. Simon, N. Fabre, F. Mesnilgrente, V. Conédéra, H. Durou, J. Power Sources 195 (2010) 1266-1269.
[24] E. Eustache, R. Frappier, R.L. Porto, S. Bouhtiyya, J.F. Pierson, T. Brousse, Electrochem. Commun. 28 (2013) 104-106.
[25] T.M. Dinh, K. Armstrong, D. Guay, D. Pech, J. Mater. Chem. A 2 (2014) 7170-7174.
[26] X. Wang, B.D. Myers, J. Yan, G. Shekhawat, V. Dravid, P.S. Lee, Nanoscale 5 (2013)4119-4122.
[27] X. Wang, Y. Yin, X. Li, Z. Vou, J. Power Sources 252 (2014) 64-72.
[28] L. Kou, T. Huang, B. Zheng, Y. Han, X. Zhao, K. Gopalsamy, H. Sun, C. Gao, Nat.Commun. 5 (2014) 3754.
[29] Cai, W., Lai, T., Ye, J. Mater. Chem. A 3, 5060-5066 (2015).
[30] A. Ramadoss, S.J. Kim, Electrochim. Acta 136 (2014) 105-111.
[31] A. Ponrouch, S. Garbarino, D. Guay, J. Power Source 221 (2013) 228-231.
[32] W. Wang, S. Guo, Lee, K. Ahmed, J. Zhong, Z. Favors, F. Zaera, M. Ozkan, C.S. Ozkan, Sci. Rep. 4 (2014) 4452.
[33] B. J. Plowman, A. P. O'Mullane, P. R. Selvakannan, and S. K. Bhargava, Chem. Commun. 2010, 46, 9182.
[34] L.D. Burke and P.F. Nugent, Gold Bull. 1997, 30, 4.
[35] C.C. Hu, Y.H. Huang, J. Electrochem, Soc. 1999, 146, 2465.
[36] J.-J. Jowa, H.-J. Lee, H-R. Chena, M.-S. Wu, T.-Y. Wei, Electrochim. Acta, 2007, 52, 2625.
[37] B.E. Conway, Electrochemical Supercapacitors, Kluwer Academic/ Plenum Publishers, New York, 1999, pp.1.
[38] B.E. Conway and W.G. Pell, J. Power Sources, 2002, 105, 169.
[39] M.-J. Lee, J. S. Kim, S. H. Choi, J. J. Lee, S. H. Kim, S. H. Jee, Y. S. Yoon, J.Electroceram. 2006, 17 (2-4):639-643.
[40] S. Cherevko and C. H. Chung, Electrochem. Commun. 2011, 13, 16.
[41] J. Liu, L. Cao, W. Huang, and Z. Li, ACS Appl. Mater. Interfaces 2011, 3, 3552.
[42] S. Ardizzone, G.Fregorana, S. Trasatti, Electrochim. Acta, 1990, 35, 263-267.
[43] J. Gaudet, A. Tavares, S. Trasatti, D. Guay, Chem. Mater. 2006, 17, 1570.
[44] J.R. McDonough, J.W. Choi, Y. Yang, F. La Mantia, Y. Zhang, Y. Cui, Appl. Phys. Lett. 95 (2009) 243109.
[45] T.M. Dinh, A. Achour, S. Vizireanu, G. Dinescu, L. Nistor, K. Armstrong, D. Guay, D. Pech, Nano Energy 10 (2014) 288-294.
[46] Beidaghi, M. & Wang, C. Electrochim. Acta 56, 9508-9514 (2011).
[47] Tian, X. et al. Adv. Mater. 27, 7476-7482 (2015).

## Claims

1. A method for forming a porous electrode having an areal capacitance of at least 3 F cm⁻², comprising forming structured current collectors by electrodeposition of a porous conductive layer of one of: gold, platinum and titanium, using a dynamic hydrogen bubble template, on a substrate, and forming a layer of active material by electrodeposition of a pseudocapacitive layer of one of: Ru, Ni, Fe, Co, Ir and Mn in the form of oxides or hydroxides within pores of the porous conductive layer through a thickness of the porous conductive layer, whereby the electrode has a linear dependence of a charge stored versus potential within a window of interest, ,as a signature of pseudo capacitive electrochemical behavior.

2. The method of claim 1, wherein said electrodeposition of the porous conductive layer comprise depositing gold in a sulfuric acidic solution at a potential in a range between -1.5V and -5 V vs saturated calomel electrode (SCE).

3. The method of claim 1, wherein said electrodeposition of the porous conductive layer comprises electrodeposition of a porous gold layer on the substrate, and said electrodeposition of the pseudocapacitive layer comprises electrodeposition of hydrous ruthenium oxide within pores of the porous gold layer.

4. The method of any one of the preceding claims, used to form two porous electrodes, the method further comprising separating the two formed porous electrodes by a solid electrolyte, yielding an all-solid-state supercapacitor.

5. The method according to any one of the preceding claims, comprising :
- prior to said electrodeposition of the porous conductive layer on the substrate and said electrodeposition within pores of the porous conductive layer: forming an interdigitated electrode resin mask on the substrate; and
- after said electrodeposition of the porous conductive layer and said electrodeposition within pores of the porous conductive layer: removing the resin mask.

6. The method according to any one of the preceding claims, wherein said electrodeposition of one of: Ru, Ni, Fe, Co, Ir and Mn is done at a temperature controlled at 50°C.

7. The method according to any one of the preceding claims, further comprising annealing in air at a temperature of 150°C.

## Patentansprüche

1. Verfahren zum Bilden einer porösen Elektrode mit einer Flächenkapazität von mindestens 3 F cm⁻², umfassend das Bilden strukturierter Stromabnehmer durch Elektrodeposition einer porösen leitfähigen Schicht aus einem von Gold, Platin und Titan unter Verwendung einer dynamischen Wasserstoffblasenschablone auf einem Substrat und das Bilden einer Schicht aktiven Materials durch Elektrodeposition einer pseudokapazitiven Schicht aus einem von Ru, Ni, Fe, Co, Ir und Mn in Form von Oxiden oder Hydroxiden innerhalb der Poren der porösen leitfähigen Schicht durch eine Dicke der porösen leitfähigen Schicht, wobei die Elektrode eine lineare Abhängigkeit der gespeicherten Ladung vom Potenzial innerhalb eines Fensters von Interesse aufweist, was ein Zeichen des pseudokapazitiven elektrochemischen Verhaltens ist.

2. Verfahren nach Anspruch 1, wobei die Elektrodeposition der porösen leitfähigen Schicht das Abscheiden von Gold in einer schwefelsäurehaltigen Lösung bei einem Potenzial in einem Bereich zwischen -1,5 V und -5 V *gegenüber* einer gesättigten Kalomelelektrode (SCE) umfasst.

3. Verfahren nach Anspruch 1, wobei die Elektrodeposition der porösen leitfähigen Schicht die Elektrodeposition einer porösen Goldschicht auf dem Substrat umfasst und die Elektrodeposition der pseudokapazitiven Schicht die Elektrodeposition von wässrigem Rutheniumoxid innerhalb der Poren der porösen Goldschicht umfasst.

4. Verfahren nach einem der vorhergehenden Ansprüche, das zum Bilden von zwei porösen Elektroden verwendet wird, wobei das Verfahren ferner das Trennen der beiden gebildeten porösen Elektroden durch einen festen Elektrolyten umfasst, wodurch ein Festkörper-Superkondensator entsteht.

5. Verfahren nach einem der vorhergehenden Ansprüche, umfassend:
- vor der Elektrodeposition der porösen leitfähigen Schicht auf dem Substrat und der Elektrodeposition innerhalb der Poren der porösen leitfähigen Schicht: Bilden einer interdigitierten Elektrodenharzmaske auf dem Substrat; und
- nach der Elektrodeposition der porösen leitfähigen Schicht und der Elektrodeposition innerhalb der Poren der porösen leitfähigen Schicht: Entfernen der Harzmaske.

6. Verfahren nach einem der vorhergehenden Ansprüche, wobei die Elektrodeposition von einem von Ru, Ni, Fe, Co, Ir und Mn bei einer kontrollierten Temperatur von 50 °C durchgeführt wird.

7. Verfahren nach einem der vorhergehenden Ansprüche, ferner umfassend das Glühen in Luft bei einer Temperatur von 150 °C.

## Revendications

1. Procédé de formation d'une électrode poreuse présentant une capacité superficielle d'au moins 3 F cm⁻², comportant la formation de collecteurs de courant structurés par électrodéposition d'une couche conductrice poreuse d'un parmi : or, platine et titane, à l'aide d'un modèle dynamique de bulles d'hydrogène, sur un substrat, et la formation d'une couche de matériau actif par électrodéposition d'une couche pseudocapacitive d'un parmi : Ru, Ni, Fe, Co, Ir et Mn sous forme d'oxydes ou d'hydroxydes à l'intérieur de pores de la couche conductrice poreuse à travers une épaisseur de la couche conductrice poreuse, l'électrode présentant une dépendance linéaire d'une charge stockée par rapport au potentiel à l'intérieur d'une fenêtre d'intérêt, en signe de comportement électrochimique pseudocapacitif.

2. Procédé selon la revendication 1, dans lequel ladite électrodéposition de la couche conductrice poreuse comporte le dépôt d'or dans une solution acide sulfurique à un potentiel dans une plage comprise entre -1,5 V et -5 V par rapport à une électrode au calomel saturé (SCE).

3. Procédé selon la revendication 1, dans lequel ladite électrodéposition de la couche conductrice poreuse comporte une électrodéposition d'une couche d'or poreuse sur le substrat, et ladite électrodéposition de la couche pseudocapacitive comporte une électrodéposition d'oxyde de ruthénium hydrique à l'intérieur de pores de la couche d'or poreuse.

4. Procédé selon l'une quelconque des revendications précédentes, utilisé pour former deux électrodes poreuses, le procédé comportant en outre la séparation des deux électrodes poreuses formées par un électrolyte solide, produisant un supercondensateur tout solide.

5. Procédé selon l'une quelconque des revendications précédentes, comportant :
- avant ladite électrodéposition de la couche conductrice poreuse sur le substrat et ladite électrodéposition à l'intérieur de pores de la couche conductrice poreuse : la formation d'un masque de résine d'électrode interdigitée sur le substrat ; et
- après ladite électrodéposition de la couche conductrice poreuse et ladite électrodéposition à l'intérieur de pores de la couche conductrice poreuse : le retrait du masque de résine.

6. Procédé selon l'une quelconque des revendications précédentes, dans lequel ladite électrodéposition de l'un parmi : Ru, Ni, Fe, Co, Ir et Mn est réalisée à une température contrôlée à 50 °C.

7. Procédé selon l'une quelconque des revendications précédentes, comportant en outre le recuit à l'air à une température de 150 °C.
